# EUROPEAN PATENT SPECIFICATION

(11) **EP 0 862 799 B1**
(45) Date of publication and mention of the grant of the patent: **08.03.2000**
(21) Application number: 96939195.2
(22) Date of filing: 21.11.1996
(51) Int. Cl.: H01R 13/52

(54) **SEALED ELECTRICAL CONNECTOR**
ABGESCHIRMTER ELEKTRISCHER VERBINDER
CONNECTEUR ELECTRIQUE HERMETIQUE

(30) Priority: 21.11.1995 GB 9523748
(43) Date of publication of application: 09.09.1998
(73) Proprietor: Loblite Limited, Gateshead, Tyne and Wear NE11 0QQ (GB)
(72) Inventor: JOLLIFFE, Peter Douglas James, Hexham, Northumberland NE46 1XX (GB)
(74) Representative: Barnard, Eric Edward
(86) International application number: GB9602879
(87) International publication number: WO9719493

(56) References cited:
- AT-B- 396 635
- DE-A- 19 513 914
- GB-A- 2 269 485

## Description

The present invention relates to an electrical connector particularly for use outdoors or in other environments where the connector is likely to be subjected to contact with water or moisture.

### PRIOR ART

One example of a known connector of the type with which the invention is concerned is described in GB-A-2269485.

A housing for a plug is described in AT-B-396 635. This housing includes a body made of two parts which may be clipped together around a plug by means of complementary snap-in pins and corresponding recesses. The assembled housing forms openings for allowing the passage of the plug terminals and a cable connected to the plug. Once the body has been assembled no provision is made for easy access to the complementary snap-in pins and corresponding recesses nor is there provision for convenient disengagement of the two parts. When the housing has been assembled around the plug it becomes associated therewith and remains around the plug whether or not the plug is received in a socket.

The housing can be used to either enhance or reduce the amount of grip available on the plug for insertion or removal from the socket. The main body of the housing is of a design which inherently provides reduced grip. However, to increase the grip available a cover is provided having bead-like grip ribs. The cover is attached to the body by a flexible film which forms a hinge. At this region the cover is also provided with a projection which is received in a depression of the body. At the other end of the cover there is provided a projection having a hook portion for engaging with a groove of the body to hold the cover in place. The film is cut when the cover is not required. The housing of AT-B-396 635 does not provide any form of seal around the plug and more particularly does not provide any form of seal around a connector formed by the plug and a socket.

### SUMMARY OF THE INVENTION

As is known from GB-A-2269485 an electrical connector constructed in accordance with the invention comprises a main body or housing containing an electrical firment, such as a socket and a cover which is pivotably mounted with a pivot joint to the main body. The cover can adopt an open position permitting access to the fitment or a closed position. Where the fitment is a socket, the socket and a plug and cable connected to the socket is sealed from the surroundings inter alia with the aid of at least one seal which serves to trap and seal the plug cable when the cover is closed. A latching mechanism for providing a snap fitting connection between the cover and the main body when the cover is closed is also provided. In accordance with the invention, and in contrast to GB-A-2269485, the cover and the main body have outwardly projecting mating regions opposite the pivot joint which are of reduced transverse dimension relative to the remainder of the connector. An elastomeric sealing member is mounted or a pair of such members are mounted in the mating regions of the main body and the cover. The mating regions are equipped with the latching mechanism which includes a pair of separated cantilevered resilient arms disposed in opposed relationship. The arms are displaceable towards and away from one another and are grippable to release the snap-fitting connection.

Preferably the elastomeric sealing members are made from polyurethane resin. One of these members, preferably that carried by the cover and urged against the cable when the cover is closed, can be softer than the other sealing member which is mounted in the main body. Where a switch is used as the electrical fitment access for a cable between the cover and the main body is unnecessary. In this case, only one elastomeric sealing member need be provided between the mating regions and this member may engage with a suitable seating. Preferably the sealing created by the sealing member or members is supplemented by another seal around the edge of the cover.

The mating regions of the lower and main body may taper progressively and smoothly inwardly away from the pivot joint to resemble a fish tail.

The main body can be provided with recesses containing detents in the form of ramp-like projections and the recesses are positioned to receive the cantilevered arms on the cover. The arms on the cover can then have apertures adapted to interengage with the detents to form the snap-fitting connection. Preferably the cantilevered arms are spaced apart to an extent so that they can be gripped between a thumb and a finger of a user and squeezed together to release the snap-fitting connection.

The invention may be understood more readily, and various other features of the invention may become more apparent from consideration of the following description.

### BRIEF DESCRIPTION OF THE DRAWINGS.

An embodiment of the invention will now be described by way of example only, with reference to the accompanying drawings wherein:

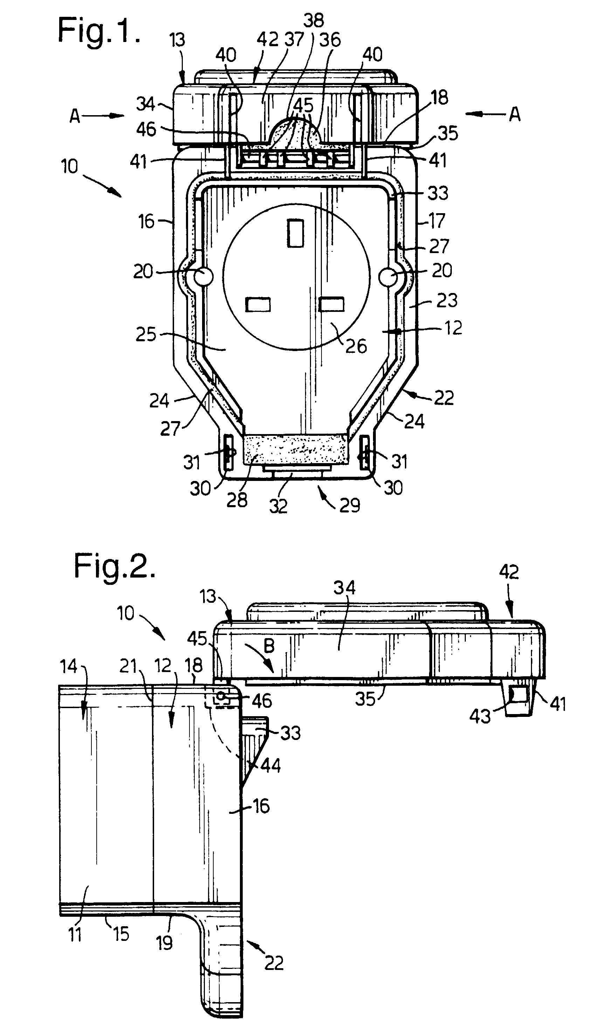

Figure 1 is a front view of an electrical connector constructed in accordance with the invention with the cover in a fully open position and
Figure 2 is a side view of the connector shown in Figure 1.

### DETAILED DESCRIPTION OF THE PREFERRED EMBODIMENT

As shown in the drawing, an electrical connector 10 constructed in accordance with the invention is composed of a mounting block 11, an intermediate connector block 12 and a hinged cover 13 all molded from rigid synthetic plastics. The mounting block 11 is rectangular and would be fixed to a mounting surface with screws passing through a rear closure wall of the block 11 in a known manner. A cable would be guided into the block 11 with the aid of a screw-threaded sealable coupling (not shown). The top and bottom walls 14,15 of the block 11 have apertures enabling the coupling to be locatad at the top or bottom. The aperture which is not used would be closed off with a removable plug (not shown). The connector block 12 has side walls 16,17 and top and bottom walls 18,19 coplanar with the corresponding walls of the block 11. Screws 20 engaging in bushings held in the block 11 serve to secure the blocks 11,12 together and a seal 21 is provided between the mating surfaces of the blocks 11,12 which combine to form a base for the cover 13.

The block 12 is equipped with a reduced width depending portion or region 22 projecting below the bottom walls 15,19 and as shown the block 12 has a perimeter wall 23 with inwardly inclined regions 24 defining the portion 22. A transverse wall 25 of the block 12 serves to mount a conventional 3 pin electrical socket 26 as illustrated. The cable guided into the block 11 via the sealable coupling is used to connect with the socket interiorly of the wall 23.

The wall 23 has a groove into which grooved elastomeric seal 27 is seated.

The block 12 can mount other types of socket 26 e.g. a two-pin socket or a socket with round pins or some other electrical fitment, such as a switch. Conveniently the block 12 is adapted to receive a variety of electrical fitments in the same location opening.

An elastomeric sealing member 28 is fitted into a recess in a base end region 29 of the wall 23. This end region 29 is also equipped with further recesses 30 containing internal detents in the form of ramp-like projections 31 and with a semi-circular cut-out 32. The top end region of the wall 23 opposite the region 29 has a raised shroud 33 projecting around the socket 26.

The cover 13 has a shaped front closure wall 42 extending between spaced-apart inner and outer perimeter walls 34,35 which are partly shaped to define a mating region which corresponds to and mates with the depending portion 22 of the block 12. The outer wall 34 has an outer surface shaped to merge smoothly with the outer surface of the wall 23 of the block 12 when the cover 13 is closed. The inner wall 35 is designed to engage in the seal 27 when the cover 13 is closed. The inner wall 35 of the cover 13 also combines with an inwardly extending formed section on the inside of the wall 42 to define a recess or pocket for receiving an open trough-like housing containing a second elastomeric sealing member 36 located in a complementary position to the first member 28. The housing can be press-fitted in the pocket and the sealing member 36 can be likewise press fitted in the housing. A lower end wall 37 of the cover 13 adjoins side regions of the wall 35 partly defining the recess or pocket and a semi-circular cut-out 38 in the wall 37 is located in a complementary position to the cut-out 32. Spaced from the side regions of the wall 35 and from the wall 34 with slots 40 there are cantilevered arms 41 which can be resiliently displaced inwardly in the direction of arrows A. The arms 41 merge into a shaped front closure wall 42 of the cover 13. The arms 41 are equipped with apertures 43 designed to interengage as a snap fit with the projections 31 in the recesses 30.

The cover 13 is pivotably connected at the top of the block 12 For this purpose the block 12 has a recess 44 which receives spaced apart support arms 45 of the cover 13 and a pivot pin 46 extends across the recess 44 and through the arms 45.

During use when an electrical plug is mated with the socket 26 the cable connected to the plug extends over the sealing member 28. As the cover 13 is swung about the pivot joint 45,46 (arrow B) the member 36 squeezes against the cable and the member 28. Pressure exerted on the mating lower regions of the cover 13 and the block 12 will cause the arms 41 to deform toward one another as they ride over the projections 31 until the projections 31 automatically snap into the apertures 43. The cover 13 is then releasably locked to the block 12 with the cable trapped between the members 28,36 and sealed thereby. The engagement of the cover wall 35 within the seal 27 completes the sealing of the interior of the connector 10. To release the cover 13 a user can squeeze the arms 41 together quite easily, say between a finger and thumb, to release the projections 31 from the apertures 43 to permit the cover 13 to be pivoted outwardly. When the plug and its cable are removed from the socket 26 the sealing members 28,36 engage on one another over an extended contact area and this combines with the grooved seal 27 to maintain the interior of the connector scaled when the cover 13 is closed.

In a preferred design of the type illustrated the members 28,36 are made from two materials one relatively soft and carried by the cover 13 and the other relatively hard and serving to fit in the housing in the reception recess. A preferred material for one or both the members 28,36 is polyurethane resin.

In the case where the socket 26 is replaced by an electrical fitment such as a switch which obviates the need for a cable to be introduced between the cover 13 and the body 11, 12 the cover 13 can be opened to permit access to the switch or fitment or closed to seal off the fitment from the surroundings. In this case the dual sealing members 28,36 are replaced by a single sealing member 28 or 36 which engages with a suitable seating surface when the cover is closed. The rim of the cover 13 is still sealed with the grooved seal 27.

## Claims

1. An electrical connector (10) comprising a main body or housing (11,12) containing an electrical fitment (26), a cover (13) pivotably mounted with a pivot joint (45,46) to the main body so as to be capable of adopting an open position permitting access to the fitment or a closed position wherein the fitment is sealed from the surroundings inter alia with the aid of at least one elastomeric seal when the cover is closed and a latching mechanism for providing a snap-fitting connection between the cover (13) and the main body (11,12) when the cover is closed; characterised in that the cover (13) and the main body (11,12) have outwardly projecting mating regions (22,42) opposite the pivot joint which are of reduced transverse dimension relative to the remainder of the connector, the elastomeric seal (23,36) is mounted in one of the mating regions of the main body and the cover and the mating regions are equipped with the latching mechanism, the latching mechanism including a pair of separated cantilevered resilient arms disposed in opposed relationship and displaceable towards and away from one another, the arms being grippable to release the snap-fitting connection.

2. An electrical connector (10) comprising a main body or housing (11,12) containing an electrical socket (26), a cover (13) pivotably mounted with a pivot joint (45,46) to the main body so as to be capable of adopting an open position permitting access to the socket or a closed position wherein the socket and a plug and cable connected to the socket is sealed from the surroundings inter alia with the aid of at least one elastomeric sealing member which serves to trap and seal the plug cable when the cover is closed and a latching mechanism for providing a snap-fitting connection between the cover (13) and the main body (11,12) when the cover is closed; characterised in that the cover (13) and the main body (11,12) have outwardly projecting mating regions (22,42) opposite the pivot joint which are of reduced transverse dimension relative to the remainder of the connector, the elastomeric sealing member (28,36) is mounted in one of the mating regions of the main body and the cover and the mating regions are equipped with the latching mechanism, the latching mechanism including a pair of separated cantilevered resilient arms disposed in opposed relationship and displaceable towards and away from one another, the arms being grippable to release the snap-fitting connection.

3. A connector according to claim 1 or 2, wherein both the mating regions (22, 42) taper progressively inwardly in a direction away from the pivot joint to resemble a fish tail.

4. A connector according to claim 1,2 or 3, wherein the or each seal or sealing member (28,36) is made from polyurethane resin.

5. A connector according to claim 1 or claims 3 or 4 when appended to claim 1, wherein the at least one elastomeric seal is in the form of two sealing members (28,36) between the mating regions and the sealing member (36) in the mating region of the cover (13) is softer than the sealing member (38) in the mating region of the main body (11,12) or vice versa.

6. A connector according to any one of claims 2 or claims 3 or 4 when appended to claim 2, wherein there are two sealing members (28,36) between the mating regions and the sealing member (36) in the mating region of the cover (13) is softer than the sealing member (38) in the mating region of the main body (11,12) or vice versa.

7. A connector according to any one of claims 1 to 6, wherein the main body is composed of a mounting block (11) remote from the cover (13) and an intermediate block (12) fixed to the mounting block and serving to mount the socket (26).

8. A connector according to any one of claims 1 to 7, wherein the cantilevered arms (41) are provided on the cover (13), the main body (11,12) is provided with recesses (30) containing detents (31) in the form of ramp-like projections and wherein the arms (41) have apertures (43) adapted to interengage with the detents to form the snap-fitting connection.

9. A connector according to any one of claims 1 to 8, wherein the main body (11,12) has a transverse wall (25) in which the fitment or socket (26) is mounted, a grooved elastomeric seal (27) extends around part of the transverse wall and the cover has a wall (35) which engages in the grooved elastomeric seal when the cover is closed.

10. A connector according to claim 9, wherein the cover has inner and outer peripheral walls (34,35) and the wall which engages in the grooved seal is the inner peripheral wall (35).

11. A connector according to claim 2 or any one of claims 3 or 4 or 6 to 10 when appended to claim 2, wherein the mating regions of the cover (13) and the main body (11,12) have semi-circular cut-outs (38,32) which enclose the plug cable when the cover is closed.

## Patentansprüche

1. Elektrischer Verbinder (10), aufweisend einem Hauptkörper oder ein Gehäuse (11,12), enthaltend einen elektrischen Anschluß (26), eine Abdeckung (13), die schwenkbar mittels eines Schwenkgelenks (45, 46) an dem Hauptkörper in der Weise montiert ist, daß sie eine geöffnete Position annehmen kann, in der der Anschluß zugänglich ist, oder eine geschlossenen Position, in der der Anschluß gegen die Umgebung abgedichtet ist, unter anderem mittels mindestens einer elastischen Abdichtung, wenn die Abdeckung geschlossen ist, und einer Laschenvorrichtung zur Schaffung einer Schnappverbindung zwischen der Abdeckung (13) und dem Hauptkörper (11, 12), wenn die Abdeckung geschlossen ist,
dadurch gekennzeichnet, daß
die Abdeckung (13) und der Hauptkörper (11,12) nach außen vorstehende zusammenpassende Abschnitte (22,42) gegenüber dem Schwenkgelenk haben, die in Bezug auf den übrigen Teil des Verbinders von verminderter Abmessung sind, wobei die elastische Abdichtung (28,36) in einem der zusammenpassenden Abschnitte des Hauptkörpers und der Abdeckung angeordnet ist und die zusammenpassenden Abschnitte mit einer Laschenvorrichtung ausgestattet sind, wobei die Laschenvorrichtung ein Paar voneinander getrennter fliegender federnder Arme beinhaltet, die in gegenüberliegender Beziehung angeordnet sind und aufeinander zu und voneinander wegbewegbar sind, wobei die Arme greifbar sind, um die Schnappverbindung zu lösen.

2. Elektrischer Verbinder (10), aufweisend einen Hauptkörper oder ein Gehäuse (11, 12), enthaltend eine elektrische Steckdose (26), eine Abdeckung (13), die schwenkbar mittels eines Schwenkgelenks (45, 46) an dem Hauptkörper in der Weise montiert ist, daß sie eine geöffnete Position einnehmen kann, die den Zugang zu der Steckdose erlaubt, oder eine geschlossene Position, in der die Steckdose und Stecker sowie Kabel mit der Steckdose verbunden sind, gegenüber der Umgebung abgedichtet ist unter anderem mittels wenigstens einer elastischen Abdichtungseinrichtung, die dazu dient, das Kabel aufzunehmen und abzudichten, wenn die Abdeckung geschlossen ist, und eine Laschenanordnung, um eine Schnappverbindung zwischen der Abdeckung (13) und dem Hauptkörper herzustellen, wenn die Abdeckung geschlossen ist,
dadurch gekennzeichnet, daß
die Abdeckung (13) und der Hauptkörper (11,12) nach außen überstehende zusammenpassende Abschnitte (42, 43) gegenüber dem Schwenkgelenk haben, die von reduzierten Abmessungen in Bezug auf den übrigen Teil des Verbinders sind, wobei die elastische Abdichtungseinrichtung (38, 36) in einem der zusammenpassenden Abschnitte des Hauptkörpers und der Abdeckung montiert sind und die zusammenpassenden Abschnitte mit einer Laschenvorrichtung ausgestattet sind, wobei die Laschenvorrichtung ein Paar voneinander getrennter fliegender Federarme aufweist, die in gegenüberliegender Beziehung angeordnet sind und zueinander und voneinander wegbewegbar sind, wobei die Arme greifbar sind, um die Schnappverbindung zu lösen.

3. Verbinder gemäß Anspruch 1 oder 2, bei dem die zusammenpassenden Abschnitte (22, 42) beide progressiv in einer Richtung vom Schwenkgelenk weg nach innen verjüngt sind, ähnlich einem Fischschwanz.

4. Ein Verbinder gemäß Anspruch 1, 2 oder 3, bei dem die oder jede Abdichtung oder Abdichtungseinrichtung (28, 36) aus einem PU-Harz besteht.

5. Verbinder gemäß Anspruch 1 oder den Ansprüchen 3 oder 4, soweit sie auf Anspruch 1 rückbezogen sind, in dem wenigstens eine elastische Abdichtung die Form von zwei abdichtenden Einrichtungen (28, 36) zwischen den zusammenpassenden Abschnitten und der Abdichteinrichtungen (36) in dem zusammenpassenden Abschnitt der Abdeckung (13) weicher ist als die Abdichteinrichtung (38) in dem zusammenpassenden Abschnitt des Hauptkörpers (11, 12) oder umgekehrt.

6. Verbinder gemäß Anspruch 2 oder den Ansprüchen 3 oder 4, soweit sie auf Anspruch 2 rückbezogen sind, in dem zwei Abdichtungseinrichtungen (28, 36) zwischen den zusammenpassenden Abschnitten vorhanden sind, von dem die Abdichteinrichtung (36) in dem zusammenpassenden Abschnitt der Abdeckung (13) weicher ist als die Abdichtungseinrichtung (38) in dem zusammenpassenden Abschnitt des Hauptkörpers (11, 12) oder umgekehrt.

7. Verbinder gemäß einem der Ansprüche 1 bis 6, bei dem der Hauptkörper von einem Montageblock (11) gebildet ist, der von der Abdeckung (13) entfernt ist, und von einem Zwischenblock (12), der an dem Montageblock befestigt ist und dazu dient, die Steckdose (26) zu montieren.

8. Verbinder gemäß einem der Ansprüche 1 bis 7, worin die fliegenden Stege an der Abdeckung (13) vorgesehen sind und der Haupkörper (11, 12) Ausnehmungen (30) mit Auslösestiften (31) in der Form rampenähnlicher Vorsprünge aufweist, worin die Stege (41) Öffnungen (43) aufweisen, die derart ausgebildet sind, daß sie mit den Auslösestiften zusammenwirken können, um eine Schnappverbindung zu bilden.

9. Verbinder gemäß einem der Ansprüche 1 bis 8, worin der Hauptkörper (11,12) eine Querwand (25) hat, in der der Anschluß oder die Steckdose (26) montiert ist, eine rillenförmige elastische Abdichtung (27) sich rund um einen Teil der Querwand erstreckt und die Abdeckung eine Wand (35) hat, die in die rillenförmige elastische Abdeckung eingreift, wenn die Abdeckung geschlossen ist.

10. Verbinder gemäß Anspruch 9, bei dem die Abdeckung innere und äußere Außenwände (34, 35) hat und die Wand, die in die rillenförmige Abdichtung eingreift, die innere Außenwand (35) ist.

11. Verbinder gemäß Anspruch 2 oder einem der Ansprüche 3, 4 oder 6 bis 10, soweit auf Anspruch 2 rückbezogen, bei dem die zusammenpassenden Abschnitte der Abdeckung (13) und der Hauptkörper (11, 12) halbkreisförmige Ausschnitte (38, 32) aufweisten, die das Steckerkabel umschließen, wenn die Abdeckung geschlossen ist.

## Revendications

1. Connecteur électrique (10) comprenant un corps ou un logement principal (11, 12) contenant un composant électrique (26), un couvercle (13) monté pivotant au moyen d'une articulation à pivot (45, 46) sur le corps principal -de manière à être apte à prendre une position ouverte permettant l'accès au composant ou une position fermée dans laquelle le composant est hermétiquement isolé de l'environnement, à l'aide, entre autres, d'au moins un joint élastomère, lorsque le couvercle est fermé, et un mécanisme de verrouillage destiné à établir une connexion par encliquetage entre le couvercle (13) et le corps principal (11, 12) lorsque le couvercle est fermé ; caractérisé en ce que le couvercle (13) et le corps principal (11, 12) présentent des zones d'appariement faisant saillie vers l'extérieur (22, 42) à l'opposé de l'articulation à pivot et dont la dimension transversale est réduite par rapport à la partie restante du connecteur, le joint élastomère (28, 36) est monté dans l'une des zones d'appariement du corps principal et le couvercle et les zones d'appariement sont munis du mécanisme de verrouillage, le mécanisme de verrouillage incluant une paire de bras élastiques séparés en porte-à-faux qui sont disposés en relation d'opposition et qui peuvent être déplacés en se rapprochant et en s'éloignant l'un de l'autre, les bras pouvant être saisis pour libérer la connexion par encliquetage.

2. Connecteur électrique (10) comprenant un corps ou un logement principal (11, 12) contenant une prise femelle électrique (26), un couvercle (13) monté pivotant au moyen d'une articulation à pivot (45, 46) sur le corps principal de manière à être apte à prendre une position ouverte permettant l'accès à la prise femelle ou une position fermée dans laquelle la prise femelle et une prise mâle et un câble connecté à la prie femelle est hermétiquement isolé de l'environnement, à l'aide, entre autres, d'au moins un élément d'étanchéité élastomère qui sert à piéger et à rendre étanche le câble de prise mâle lorsque le couvercle est fermé, et un mécanisme de verrouillage destiné à établir une connexion par encliquetage entre le couvercle (13) et le corps principal (11, 12) lorsque le couvercle est fermé; caractérisé en ce que le couvercle (13) et le corps principal (11, 12) présentent des zones d'appariement faisant saillie vers l'extérieur (22, 42) à l'opposé de l'articulation à pivot et dont la dimension transversale est réduite par rapport à la partie restante du connecteur, l'élément d'étanchéité élastomère (28, 36) est monté dans l'une des zones d'appariement du corps principal et le couvercle et les zones d'appariement sont munis du mécanisme de verrouillage, le mécanisme de verrouillage incluant une paire de bras élastiques séparés en porte-à-faux qui sont disposés en relation d'opposition et qui peuvent être déplacés en se rapprochant et en s'éloignant l'un de l'autre, les bras pouvant être saisis pour libérer la connexion par encliquetage.

3. Connecteur selon la revendication 1 ou 2, dans lequel les deux zones d'appariement (22, 42) s'effilent progessivement vers l'intérieur selon une direction qui s'écarte de l'articulation à pivot de manière à ressembler à une queue de poisson.

4. Connecteur selon la revendication 1, 2 ou 3, dans lequel le ou chaque joint ou élément d'étanchéité (28, 36) est fabriqué à partir de résine polyuréthane.

5. Connecteur selon la revendication 1 ou 3 ou 4 lorsque ces deux dernières dépendent de la revendication 1, dans lequel le au moins un joint élastomère se présente sous la forme de deux éléments d'étanchéité (28, 36) entre les zones d'appariement, et l'élément d'étanchéité (36) de la zone d'appariement du couvercle (13) est plus doux que l'élément d'étanchéité (38) de la zone d'appariement du corps principal (11, 12) ou vice versa.

6. Connecteur selon l'une quelconque des revendications 2 ou 3 ou 4 lorsque ces deux dernières dépendent de la revendication 2, dans lequel sont présents deux éléments d'étanchéité (28, 36) entre les zones d'appariement, et l'élément d'étanchéité (36) de la zone d'appariement du couvercle (13) est plus doux que l'élément d'étanchéité (38) de la zone d'appariement du corps principal (11, 12) ou vice versa.

7. Connecteur selon l'une quelconque des revendications 1 à 6, dans lequel le corps principal se compose d'un bloc de montage (11) séparé du couvercle (13) et d'un bloc intermédiaire (12) fixé au bloc de montage et qui sert à monter la prise femelle (26).

8. Connecteur selon l'une quelconque des revendications 1 à 7, dans lequel les bras en porte-à-faux (41) sont disposés sur le couvercle (13), le corps principal (11, 12) comporte des évidements (30) contenant des goujons d'arrêt (31) se présentant comme des saillies en forme de rampes et dans lequel les bras (41) présentent des ouvertures (43) qui sont conçues pour s'engager mutuellement avec les goujons d'arrêt de manière à former la connexion par encliquetage.

9. Connecteur selon l'une quelconque des revendications 1 à 8, dans lequel le corps principal (11, 12) possède une paroi transversale (25) dans laquelle est monté le composant ou la prise femelle (26), un joint élastomère rainuré (27) s'étend le long d'une partie de la paroi transversale et le couvercle possède une paroi (35) qui s'engage dans le joint élastomère rainuré lorsque le couvercle est fermé.

10. Connecteur selon la revendication 9, dans lequel le couvercle possède des parois périphériques intérieure et extérieure (34, 35) et la paroi qui s'engage dans le joint rainuré est la paroi périphérique intérieure (35).

11. Connecteur selon la revendication 2 ou l'une quelconque des revendications 3, 4, 6 ou 10 lorsque ces dernières dépendent de la revendication 2, dans lequel les zones d'appariement du couvercle (13) et le corps principal (11, 12) comportent des lumières semi-circulaires (38, 32) qui englobent le câble de prise mâle lorsque le couvercle est fermé.
